(19) Europäisches Patentamt
European Patent Office
Office européen des brevets

(11) EP 3 492 277 B1

(12) **EUROPEAN PATENT SPECIFICATION**

(45) Date of publication and mention of the grant of the patent:
**06.01.2021 Bulletin 2021/01**

(51) Int Cl.:
***B60C 1/00*** *(2006.01)* ***C08L 7/00*** *(2006.01)*

(21) Application number: **18206672.0**

(22) Date of filing: **16.11.2018**

(54) **RUBBER COMPOSITION FOR TIRE**

KAUTSCHUKZUSAMMENSETZUNG FÜR REIFEN

COMPOSITION DE CAOUTCHOUC POUR PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2017 JP 2017230631**

(43) Date of publication of application:
**05.06.2019 Bulletin 2019/23**

(73) Proprietor: **Sumitomo Rubber Industries Ltd.**
**Kobe-shi, Hyogo 651-0072 (JP)**

(72) Inventor: **ONO, Shuichiro**
**Kobe-shi, Hyogo 651-0072 (JP)**

(74) Representative: **TBK**
**Bavariaring 4-6**
**80336 München (DE)**

(56) References cited:
**EP-A1- 2 783 880** **EP-A1- 2 835 386**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 492 277 B1

**Description**

TECHNICAL FIELD

The present invention relates to a rubber composition for a tread and a studless tire having a tread manufactured using the rubber composition.

BACKGROUND OF THE INVENTION

One of important performances required for a studless tire is, for example, braking performance on ice. An adhesive friction, hysteresis friction and scratching friction (digging-up friction) are known as dominant friction factors between a tread rubber and a road surface.

For increasing a friction force between a tread rubber and an iced road surface, so far a method of increasing an area coming into contact with a road surface by decreasing a rubber hardness at low temperature in consideration of an adhesive friction, a method of increasing a hysteresis loss of a rubber in consideration of a hysteresis friction, and a method of increasing a friction force of a rubber itself by compounding a material having a Mohs hardness higher than that of ice in consideration of a scratching friction have been studied.

On the other hand, an iced road surface is different from a dry road surface, and a friction coefficient varies depending on temperature, and it is known that a degree of contribution of each friction varies depending on a mode of a friction. Under such a condition, development of a studless tire being capable of exhibiting a high friction force under as various environments as possible is demanded.

In a studless tire, a top priority is given to grip performance on a road surface of ice and snow. Therefore, a technology of using a butadiene rubber and a natural rubber being excellent if flexibility under low temperature environment instead of a styrene-butadiene rubber has become mainstream. Therefore, it is difficult to secure grip performance (wet grip performance) on a wet road surface when there is no snowfall. Thus in a tire for a passenger vehicle, a technology of securing wet grip performance while maintaining abrasion resistance by changing carbon black to silica as a reinforcing agent (JP H05-51484 A, JP H09-87427 A).

EP2835386A1 relates to a copolymer including a monomer unit (a) derived from a conjugated diene having not more than 12 carbon atoms and a monomer unit (b) derived from farnesene; a rubber composition including the copolymer, a rubber component and carbon black and/or silica; and a tire using the rubber composition at least as a part thereof.

EP2783880A1 relates to a studless winter tire including a tread formed from a rubber composition containing a predetermined amount of a farnesene resin obtained by polymerizing farnesene and a tire including a tread formed from a rubber composition containing a predetermined amount of at least one myrcene resin selected from the group consisting of myrcene polymers with a Mw of 1,000-500,000, myrcene-butadiene copolymers with a Mw of 1,000-500,000, and myrcene-styrene copolymers with a Mw of 1,000-150,000; and a predetermined amount of a silica with an $N_2SA$ of 40-400 $m^2/g$, the rubber component containing a predetermined amount of a high-cis polybutadiene with a cis content of 95% by mass or more.

SUMMARY OF THE INVENTION

When a rubber hardness at low temperature is decreased by increasing an amount of oil in order to enhance an adhesive friction, a hysteresis friction also tends to decrease. Therefore, in a temperature region of about -10°C where not so much water is generated, braking performance on ice is enhanced by enhancement of a hysteresis friction, but at a relatively high temperature of around 0°C, there is a problem that braking performance on ice is lowered by lowering of a hysteresis friction and at the same time, wet performance is also lowered.

An object of the present invention is to provide a rubber composition for a tread assuring less temperature dependency of on-ice performance and good wet grip performance by inhibiting lowering of hysteresis loss while maintaining a low rubber hardness at low temperature, and a studless tire having a tread composed of the rubber composition.

The present inventors have made intensive studies to solve the above-mentioned problem and as a result, have found that by compounding an isoprene rubber, a terpene resin and a predetermined branched conjugated diene copolymer, a rubber composition for a tread assuring less temperature dependency of on-ice performance and good wet grip performance can be obtained, and have completed the present invention.

Namely, the present invention relates to:

[1] a rubber composition for a tread comprising a rubber component comprising an isoprene rubber, a terpene resin and a branched conjugated diene copolymer, wherein the branched conjugated diene copolymer is prepared by copolymerizing a branched conjugated diene compound represented by the general formula (1):

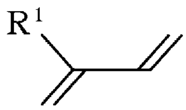 (1)

wherein $R^1$ is an aliphatic hydrocarbon having 6 to 11 carbon atoms and a conjugated diene compound represented by the general formula (2):

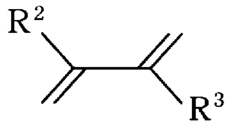 (2)

wherein $R^2$ and $R^3$ are the same or different and each is a hydrogen atom, an aliphatic hydrocarbon group having 1 to 3 carbon atoms or a halogen atom, and
wherein a copolymerization ratio of the branched conjugated diene compound (1) is 1 to 99% by weight and a copolymerization ratio of the conjugated diene compound (2) is 1 to 99% by weight,
wherein the terpene resin is at least one selected from the group consisting of a terpene-phenol resin, which is prepared using a terpene compound and phenolic compound, and a terpene-styrene resin, which is prepared using a terpene compound and styrene, wherein the terpene compound is at least one selected from α-pinene, β-pinene, 3-carene (δ-3-carene), dipentene, limonene, myrcene, alloocimene, ocimene, α-phellandrene, α-terpinene, γ-terpinene, terpinolene, 1,8-cineol, 1,4-cineol, α-terpineol, β-terpineol and γ-terpineol,
[2] the rubber composition for a tread of the above [1], comprising 1 to 20 parts by mass of the terpene resin and 1 to 20 parts by mass of the branched conjugated diene copolymer based on 100 parts by mass of the rubber component,
[3] the rubber composition for a tread of the above [1] or [2], wherein the branched conjugated diene compound (1) is myrcene and/or farnesene,
[4] the rubber composition for a tread of any of the above [1] to [3], wherein the conjugated diene compound (2) is 1,3-butadiene and/or isoprene, and
[5] a studless tire having a tread composed of the rubber composition for a tread of any of the above [1] to [4].

A rubber composition for a tread of the present invention and a studless tire having a tread composed of the rubber composition assures less temperature dependency of on-ice performance and good wet grip performance since a low rubber hardness at low temperature is maintained and lowering of hysteresis loss is inhibited. Namely, the studless tire of the present invention exhibits good grip performance not only under low temperature environment not generating so much water but also at a relatively high temperature of around 0°C and on a wet road surface when there is no snowfall, and versatility of the tire is high.

DETAILED DESCRIPTION

One embodiment of the present invention is a rubber composition for a tread comprising an isoprene rubber, a terpene resin and a predetermined branched conjugated diene copolymer.
For a rubber material for a tire, there are a loss tangent (tanδ) as a design parameter relating to a hysteresis loss and a complex elastic modulus (E*) as a design parameter relating to a hardness. In order to enhance wet grip performance, it is necessary to increase tanδ, thereby increasing energy dissipation by heat generation and the like.
Either of the isoprene rubber, the terpene resin and the branched conjugated diene copolymer according to this embodiment have isoprene or isoprenoid in a partial structure thereof, and are compatible with each other and compatibility is good. In particular, the terpene resin is low in an SP value as compared with other adhesive resins and has high compatibility with an isoprene rubber such as a natural rubber. Therefore, in the case of compounding, for example, a natural rubber (NR), a temperature dispersion curve of tanδ derived from the NR ascends at around 0°C, and therefore, tanδ at a relatively high temperature of around 0°C can be increased while maintaining a low E*. Namely, even if a rubber for a tread for a studless tire is so designed as to have E* lower than that of a conventional rubber, a degree of decrease of tanδ is small, and therefore, the both of low E* and high tanδ can be enhanced.

<Rubber component>

Examples of a rubber component suitably used in this embodiment include an isoprene rubber and a butadiene

rubber (BR) from the viewpoint of good on-ice performance and for securing rubber flexibility during running on ice and snow.

(Isoprene rubber)

Examples of the usable isoprene rubber include those usually used in a tire industry, for example, an isoprene rubber (IR), a natural rubber and the like. Examples of the natural rubber include modified natural rubbers such as an epoxidized natural rubber (ENR), a hydrogenated natural rubber (HNR), a deproteinized natural rubber (DPNR), an ultra pure natural rubber (UPNR) and a grafted natural rubber besides an un-modified natural rubber (NR). These rubbers may be used alone, or may be used in combination of two or more thereof.

NR is not limited particularly, and those which are commonly used in a tire industry can be used. For example, there are SIR20, RSS#3, TSR20, and the like.

A content of the isoprene rubber in the rubber component is preferably not less than 10% by mass, more preferably not less than 20% by mass, further preferably not less than 30% by mass from the viewpoint of good kneading processability and extrusion processability of the rubber. On the other hand, the content of the isoprene rubber is preferably not more than 80% by mass, more preferably not more than 70% by mass, further preferably not more than 60% by mass from the viewpoint of good low temperature characteristics.

(BR)

BR is not limited particularly, and examples of usable BRs include BRs usually used in a tire industry, for example, a BR having a content of cis-1,4 bond of less than 50% by mass (low cis BR), a BR having a content of cis-1,4 bond of not less than 90% by mass (high cis BR), a rare-earth butadiene rubber (rare-earth BR) synthesized using a rare-earth element catalyst, a BR comprising syndiotactic polybutadiene crystals (SPB-containing BR), a modified BR (high cis modified BR, low cis modified BR) and the like. Among these, it is preferable to use at least one selected from the group consisting of a high cis BR, a low cis BR and a low cis modified BR.

Examples of the high-cis BRs include BR1220 available from ZEON CORPORATION, BR130B, BR150B and BR150L available from Ube Industries, Ltd., R730 available from JSR Corporation and the like. When the rubber component comprises a high cis BR, low temperature characteristics and abrasion resistance can be enhanced. Examples of the rare-earth BRs include BUNA-CB25 manufactured by Lanxess K.K. and the like.

An example of the SPB-containing BR is not one in which 1,2-syndiotactic polybutadiene crystals are simply dispersed in the BR, but one in which 1,2-syndiotactic polybutadiene crystals are chemically bonded with the BR and dispersed therein. Examples of such SPB-containing BR include VCR-303, VCR-412 and VCR-617 manufactured by Ube Industries, Ltd. and the like.

Examples of a modified BR include a modified BR (tin modified BR) obtained by performing polymerization of 1,3-butadiene with a lithium initiator and then adding a tin compound, and further having the molecular terminals bonded with a tin-carbon bond, a butadiene rubber (modified BR for silica) having an alkoxysilane condensate compound in an active terminal thereof and the like. Examples of such modified BRs include BR1250H (tin-modified) manufactured by ZEON CORPORATION, S-modified polymer (modified for silica) manufactured by Sumitomo Chemical Industry Company Limited and the like.

A modified BR having a cis content of not more than 50% by mass (hereinafter also referred to as a modified low cis BR) can be suitably used as a modified BR. By compounding the modified low cis BR, it is possible to enhance dispersibility of silica and improve wet grip performance and fuel efficiency.

Examples of the modified low cis BR include BRs having a low cis content and modified with a compound having a functional group having at least one atom selected from the group consisting of nitrogen, oxygen and silicon. For example, there are a terminal-modified low cis BR obtained by modifying at least one terminal of BR with a compound (modifier) having the above-mentioned functional group, a main chain-modified low cis BR having the above-mentioned functional group at its main chain, a terminal-modified and main chain-modified low cis BR having the above-mentioned functional groups at its main chain and its terminal (for example, a terminal-modified and main chain-modified low cis BR having the above-mentioned functional group at its main chain and having at least one terminal modified with the above-mentioned modifier and the like. Preferred is a terminal-modified low cis BR.

Examples of the above-mentioned functional group include an amino group, an amide group, an alkoxysilyl group, an isocyanate group, an imino group, an imidazole group, a urea group, an ether group, a carbonyl group, an oxycarbonyl group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group and the like. It is noted that these functional groups may have a substituent group. For the reason that an effect of enhancing fuel efficiency is high, primary, secondary and tertiary amino groups (in particular, glycidylamino group), an epoxy group, a hydroxyl group, an alkoxy group

(preferably an alkoxy group having 1 to 6 carbon atoms) and an alkoxysilyl group (preferably an alkoxysilyl group having 1 to 6 carbon atoms) are preferable.

Preferred as a terminal-modified low cis BR are modified butadiene rubber (S-modified low cis BR) having a low cis content and modified with a compound represented by the following formula (I):

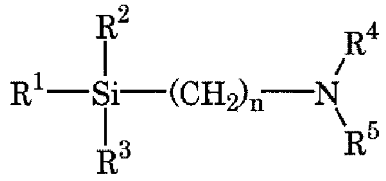

(I)

wherein in the formula (I), $R^1$, $R^2$ and $R^3$ are the same or different, and each is an alkyl group, an alkoxy group, a silyloxy group, an acetal group, a carboxyl group (-COOH), a mercapto group (-SH) or a derivative thereof; $R^4$ and $R^5$ are the same or different, and each is a hydrogen atom or an alkyl group; $R^4$ and $R^5$ may be bonded to form a ring structure with a nitrogen atom; and n is an integer.

Examples of the above-mentioned S-modified low cis BRs include those described in JP 2010-111753 A.

In the formula (I), an alkoxy group (an alkoxy group having preferably 1 to 8, more preferably 1 to 4 carbon atoms) is suitable as $R^1$, $R^2$ and $R^3$ from a point that good fuel efficiency and durability can be obtained. An alkyl group (an alkyl group having preferably 1 to 3 carbon atoms) is suitable as $R^4$ and $R^5$. "n" is preferably an integer of preferably 1 to 5, more preferably 2 to 4, further preferably 3. In the case where $R^4$ and $R^5$ are bonded to form a ring structure with a nitrogen atom, preferable is a 4- to 8-membered ring. It is noted that an alkoxy group include a cycloalkoxy group (cyclohexyloxy group and the like) and an aryloxy group (phenoxy group, benzyloxy group and the like). By use of a preferable compound, a good effect of the present invention can be obtained.

Examples of the compound represented by the formula (I) include 2-dimethylaminoethyltrimethoxysilane, 3-dimethylaminopropyltrimethoxysilane, 2-diethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, 3-diethylaminopropyltriethoxysilane and the like. Among these, 3-dimethylaminopropyltrimethoxysilane, 3-dimethylaminopropyltriethoxysilane and 3-diethylaminopropyltrimethoxysilane are preferable from a point that the above-mentioned performance can be improved satisfactorily. These may be used alone, or may be used in combination of two or more.

Well-known methods such as those described in JP 6-53768 B, JP 6-57767 B and the like can be used as a method of modifying a butadiene rubber with the compound represented by the formula (I) (modifying agent). For example, a butadiene rubber can be modified by bringing a butadiene rubber into contact with the compound, and specifically there is a method of preparing a butadiene rubber by anionic polymerization and adding a predetermined amount of the compound to the rubber solution to react a butadiene rubber polymer terminal (active terminal) with the compound.

Further, a modified butadiene rubber having a low cis content and modified with a low molecular weight compound having a glycidyl amino group in its molecule is preferable as the terminal-modified low cis BR. For example, a modified butadiene rubber having a low cis content and modified with a low molecular weight compound represented by the following formula can be used suitably:

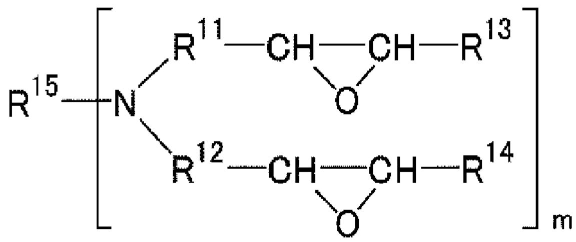

wherein $R^{11}$ and $R^{12}$ are the same or different and each is a hydrocarbon group having 1 to 10 carbon atoms; the hydrocarbon group may have at least one group selected from the group consisting of ether and tertiary amine; $R^{13}$ and $R^{14}$ are the same or different and each is a hydrogen atom or a hydrocarbon group having 1 to 20 carbon atoms; the hydrocarbon group may have at least one group selected from the group consisting of ether and tertiary amine; $R^{15}$ is a hydrocarbon group having 1 to 20 carbon atoms; the hydrocarbon group may have at least one group selected from the group consisting of ether, tertiary amine, epoxy, carbonyl and halogen; and "m" is an integer of 1 to 6.

$R^{11}$ and $R^{12}$ are preferably alkylene groups having 1 to 10 carbon atoms (preferably 1 to 3 carbon atoms). $R^{13}$ and $R^{14}$ are preferably hydrogen atoms. $R^{15}$ is a hydrocarbon group having 3 to 20 carbon atoms (preferably 6 to 10 carbon atoms, more preferably 8 carbon atoms), and a cycloalkyl group and cycloalkylene group represented by the

following formulae are preferable, and a cycloalkylene group is more preferable.

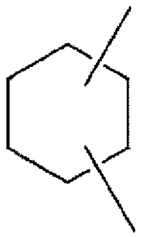 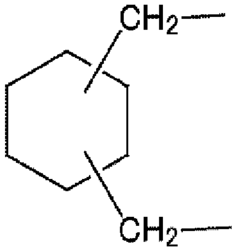 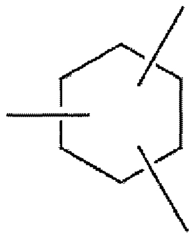 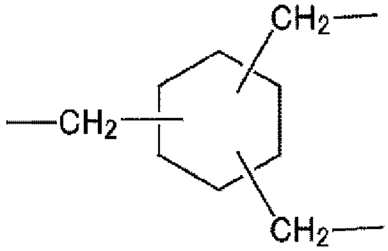

Further, "m" is preferably 2 to 3. For example, tetraglycidyl m-xylenediamine, tetraglycidyl aminodiphenylmethane, tetraglycidyl-p-phenylenediamine, diglycidyl aminomethylcyclohexane, tetraglycidyl-1,3-bisaminomethylcyclohexane and the like are used suitably as the compound represented by the above-mentioned formula.

A more preferable terminal-modified low cis BR is a modified butadiene rubber (A-modified low cis BR) having a low cis content and modified with a mixture of a low molecular weight compound having a glycidylamino group in its molecule and an oligomer of a dimer or more of the low molecular weight compound. Examples of the A-modified low cis BR include those described in JP 2009-275178 A and the like.

Any one selected from those exemplified above may be used alone, and two or more thereof may be used in combination.

A total content of BR in the rubber component is preferably not less than 35% by mass, more preferably not less than 37% by mass, further preferably not less than 40% by mass from the viewpoint of abrasion resistance. On the other hand, the content of BR is preferably not more than 80% by mass, more preferably not more than 70% by mass, further preferably not more than 60% by mass from the viewpoint of wet grip performance.

When compounding the modified BR, its content in the rubber component is preferably not less than 25% by mass, more preferably not less than 30% by mass, further preferably not less than 35% by mass from the viewpoint of on-ice braking performance. On the other hand, the content is preferably not more than 70% by mass, more preferably not more than 60% by mass, further preferably not more than 50% by mass from the viewpoint of processability and on-ice braking performance.

(Other rubber components)

In this embodiment, crosslinkable rubber components usually used in a rubber industry can be used as rubber components other than the isoprene rubber and BR, and examples thereof include a styrene-butadiene rubber (SBR), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluorine-containing rubber (FKM), an acrylic rubber (ACM), a hydrin rubber and the like. These crosslinkable rubber components may be used alone, or may be used in combination of two or more thereof.

<Branched conjugated diene copolymer>

The branched conjugated diene copolymer according to this embodiment is a copolymer obtained by copolymerizing the branched conjugated diene compound (1) with the conjugated diene compound (2). It is preferable that the branched conjugated diene copolymer is compounded instead of a softening agent such as oil which has been compounded so far. Thus, an effect of the present invention can be obtained more suitably. In particular, a farnesene-vinyl monomer copolymer can be suitably used as a softening agent for a tire since it is a liquid at normal temperature.

A glass transition temperature (Tg) of the branched conjugated diene copolymer is preferably not higher than -15°C, more preferably not higher than -30°C, and is preferably not lower than -80°C, more preferably not lower than -70°C. When the Tg is within the above-mentioned range, the copolymer can be used suitably as a softening agent for a tire. It is noted that the Tg is a value measured in accordance with JIS K 7121: 1987 using a differential scanning calorimeter (Q200) available from TA Instruments, Japan at a heat-up rate of 10°C/min.

A weight-average molecular weight (Mw) of the branched conjugated diene copolymer is preferably not less than 3000, more preferably not less than 5000, further preferably not less than 8000 from the viewpoint of handling property and abrasion resistance. On the other hand, the Mw of the branched conjugated diene copolymer is preferably not more than 500000, more preferably not more than 300000, further preferably not more than 150000 from the viewpoint of on-ice grip performance.

A melting viscosity of the branched conjugated diene copolymer is preferably not more than 1000 Pa·s, more

preferably not more than 650 Pa·s, further preferably not more than 200 Pa·s. On the other hand, the melting viscosity is preferably not less than 1 Pa·s, more preferably not less than 5 Pa·s. When the melting viscosity is within the above-mentioned range, the copolymer can be used suitably as a softening agent for a tire, and is good in blooming resistance. It is noted that the melting viscosity is a value measured at 38°C using a Brookfield viscometer (manufactured by Brookfield Engineering Labs. Inc.).

In the branched conjugated diene compound (1), examples of the aliphatic hydrocarbon group having 6 to 11 carbon atoms include those having a normal structure such as hexyl, heptyl, octyl, nonyl, decyl and undecyl, an isomer and/or an unsaturated isomer, and derivatives thereof (for example, halides, hydroxides and the like). In particular, a 4-methyl-3-pentenyl group, a 4,8-dimethyl-nona-3,7-dienyl group and the like and derivatives thereof are preferable.

Examples of the branched conjugated diene compound (1) are farnesene, myrcene and the like.

Herein, "farnesene" includes any isomers such as α-farnesene ((3E,7E)-3,7,11-trimethyl-1,3,6,10-dodecatetraene) and β-farnesene, and among these, (E)-β-farnesene (7,11-dimethyl-3-methylene-1,6,10-dodecatriene) having the following chemical structure is preferred.

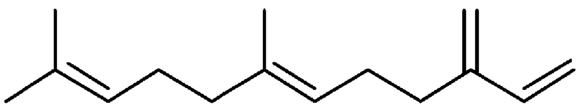

Farnesene may be one prepared from petroleum resources through a chemical synthesis or may be extracted from an insect such as aphid and a plant such as apple. It is preferable that farnesene is one prepared by cultivating microorganisms using a source of carbon derived from saccharide.

Herein, "myrcene" includes α-myrcene (2-methyl-6-methyleneocta-1,7-diene) and β-myrcene, and among these, β-myrcene (7-methyl-3-methyleneocta-1,6-diene) having the following chemical structure is preferred.

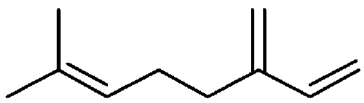

The branched conjugated diene compounds (1) can be used alone or can be used in combination of two or more thereof.

In the conjugated diene compound (2), examples of the aliphatic hydrocarbon group having 1 to 3 carbon atoms are methyl, ethyl, n-propyl, isopropyl, and the like, and among these, methyl is preferred. Examples of the halogen atom are fluorine, chlorine, bromine and iodine, and among these, chlorine is preferred.

Each of $R^2$ or $R^3$ of the conjugated diene compound (2) is independently preferably a hydrogen atom, methyl, ethyl, n-propyl or isopropyl, and a hydrogen atom or methyl is more preferred. Examples of the conjugated diene compound (2) are 1,3-butadiene, isoprene, 2,3-dimethyl-1,3-butadiene, and the like, and among these, 1,3-butadiene and isoprene are preferred.

The conjugated diene compounds (2) can be used alone or can be used in combination of two or more thereof.

Any one of the branched conjugated diene polymers exemplified above may be used alone or may be used in combination of two or more thereof. In this embodiment, commercially available branched conjugated diene polymers may be used. Examples of the farnesene-butadiene copolymer include those manufactured by KURARAY CO., LTD., etc.

A content of the branched conjugated diene polymer is preferably not less than 1 part by mass, more preferably not less than 3 parts by mass, further preferably not less than 5 parts by mass based on 100 parts by mass of the rubber component. When the content is less than 1 part by mass, there is a tendency that it is impossible to obtain a sufficient effect of improving performance on ice and snow and abrasion resistance and an effect of inhibiting a hardness change and discoloration of a tire surface. On the other hand, the content of the branched conjugated diene polymer is preferably not more than 50 parts by mass, more preferably not more than 20 parts by mass, further preferably not more than 15 parts by mass. When the content exceeds 50 parts by mass, handling property and abrasion resistance tend to be deteriorated.

The copolymerization ratio of the branched conjugated diene compound (1) is not limited particularly as long as it is 1 to 99% by weight. A lower limit of the copolymerization ratio of the branched conjugated diene compound (1) is preferably 5% by weight or more, more preferably 10% by weight or more, further preferably 20% by weight or more from the viewpoint of processability of the rubber composition. On the other hand, an upper limit of the copolymerization ratio is preferably not more than 90% by weight, more preferably not more than 80% by weight, further preferably not more than 70% by weight.

The copolymerization ratio of the conjugated diene compound (2) is not limited particularly as long as it is 1 to

99% by weight. A lower limit of the copolymerization ratio of the conjugated diene compound (2) is preferably 10% by weight or more, more preferably 20% by weight or more, further preferably 30% by weight or more. On the other hand, an upper limit of the copolymerization ratio is preferably not more than 95% by weight, more preferably not more than 90% by weight, further preferably not more than 80% by weight.

In the branched conjugated diene copolymer, the total of the polymerization ratios of the branched conjugated diene compound (1) and the conjugated diene compound (2) is 100% by weight.

An order of copolymerization of the branched conjugated diene compound (1) and the conjugated diene compound (2) is not limited particularly. For example, all the monomers may be subjected to random copolymerization simultaneously, or after previously copolymerizing specific monomer or monomers (for example, only the branched conjugated diene compound (1) monomer, only the conjugated diene compound (2) monomer, or monomers arbitrarily selected from these), the remaining monomers or monomer may be added and copolymerized, or each monomer may be previously copolymerized respectively, and then subjected to block copolymerization.

Such copolymerization can be carried out by a usual method, for example, by anionic polymerization reaction, coordination polymerization or the like.

A polymerization method is not limited particularly, and any of a solution polymerization method, an emulsion polymerization method, a gas phase polymerization method and a bulk polymerization method can be used. Among these, a solution polymerization method is preferred. The polymerization may be carried out batchwise or continuously.

Anionic polymerization can be carried out in a proper solvent in the presence of an anionic initiator. As an anionic initiator, any of usual ones can be used suitably, and examples of such an anionic initiator are organolithium compounds having a general formula $RLi_x$ (R is an aliphatic, aromatic or alicyclic group having one or more carbon atoms, x is an integer of 1 to 20). Examples of proper organolithium compounds are methyllithium, ethyllithium, n-butyllithium, sec-butyllithium, tert-butyllithium, phenyllithium and naphthyllithium. Preferred organolithium compounds are n-butyllithium, and sec-butyllithium. Anionic initiators can be used alone or can be used in a mixture of two or more thereof. An amount of a polymerization initiator for anionic polymerization is not limited particularly, and it is preferable to use, for example, in an amount of preferably from about 0.05 mmol to 35 mmol, more preferably from about 0.05 mmol to 0.2 mmol per 100 g of all the monomers to be subjected to polymerization. If the amount of the polymerization initiator is less than 0.05 mmol, there is a tendency that the copolymer becomes not in the form of rubber but in the form of resin, and if the amount of the polymerization initiator is more than 35 mmol, there is a tendency that the copolymer is soft and an effect produced by copolymerizing the branched conjugated diene compound (1) for processability is decreased.

As a solvent to be used for the anionic polymerization, any of solvents can be used suitably as long as they neither inactivate the anionic initiator nor stop the polymerization reaction, and any of polar solvents and nonpolar solvents can be used. Examples of polar solvents are ether solvents such as tetrahydrofuran, and examples of nonpolar solvents are chain hydrocarbons such as hexane, heptane, octane and pentane, cyclic hydrocarbons such as cyclohexane, aromatic hydrocarbons such as benzene, toluene and xylene, and the like. These solvents can be used alone or can be used in a mixture of two or more thereof.

It is further preferable to carry out the anionic polymerization in the presence of a polar compound. Examples of polar compounds are dimethyl ether, diethyl ether, ethyl methyl ether, ethyl propyl ether, tetrahydrofuran, dioxane, diphenyl ether, tripropylamine, tributylamine, trimethylamine, triethylamine, N,N,N',N'-tetramethylethylenediamine (TMEDA) and the like. Polar compounds can be used alone or can be used in a mixture of two or more thereof. The polar compound affects controlling the micro structure of butadiene portion and is useful for reducing the content of 1,2-structure. The amount of polar compound varies depending on kind thereof and the polymerization conditions, and a molar ratio thereof to the anionic initiator (polar compound/anionic initiator) is preferably 0.1 or more. When the molar ratio of the polar compound to the anionic initiator (polar compound/anionic initiator) is less than 0.1, there is a tendency that an effect of using the polar compound for controlling the micro structure is not sufficient.

The reaction temperature of the anionic polymerization is not limited particularly as long as the reaction advances properly, and usually is preferably from -10°C to 100°C, more preferably from 25°C to 70°C. In addition, the reaction time varies depending on charging amounts, reaction temperature and other conditions, and usually, for example, about 3 hours is sufficient.

The anionic polymerization can be terminated by adding a reaction inhibitor to be usually used in this field. Examples of the reaction inhibitor are polar solvents having an active proton such as alcohols, for example, methanol, ethanol and isopropanol or acetic acid, a mixture thereof, or a mixture of the polar solvents with nonpolar solvents such as hexane and cyclohexane. A sufficient amount of reaction inhibitor is usually an equimolar amount or two-fold molar amount to the anionic initiator.

After the polymerization reaction, the branched conjugated diene copolymer can be separated from the polymerization solution easily by removing the solvent by a usual method or by pouring the polymerization solution in an alcohol of an amount equal to or more than the amount of polymerization solution and precipitating the branched conjugated diene copolymer.

The coordination polymerization can be carried out using a coordination polymerization initiator instead of the anionic initiator in the anionic polymerization. Any of usual coordination polymerization initiators can be suitably used, and examples thereof are catalysts that are transition metal-containing compounds such as lanthanoid compounds, titanium compounds, cobalt compounds and nickel compounds. In addition, if desired, an aluminum compound or a boron compound can be used as a co-catalyst.

The lanthanoid compound is not limited particularly as long as it contains any of elements (lanthanoids) of atomic numbers 57 to 71, and neodymium is preferred as the lanthanoid. Examples of the lanthanoid compounds are carboxylates, β-diketone complexes, alkoxides, phosphates, phosphites, halides and the like of these elements. Among these, from the viewpoint of easy handling, carboxylates, alkoxides, and β-diketone complexes are preferred.

Examples of the titanium compounds are titanium-containing compounds having one of a cyclopentadienyl group, an indenyl group, a substituted cyclopentadienyl group or a substituted indenyl group and also having 3 substituents selected from a halogen, an alkoxysilyl group and an alkyl group, and preferred are compounds having one alkoxysilyl group from the viewpoint of catalytic activity.

Examples of the cobalt compounds are halides, carboxylates, β-diketone complexes, organic base complexes, organic phosphine complexes, and the like of cobalt.

Examples of the nickel compounds are halides, carboxylates, β-diketone complexes, organic base complexes, and the like of nickel.

Catalysts to be used as a coordination polymerization initiator can be used alone or can be used in combination of two or more thereof. An amount of a catalyst to be used as a polymerization initiator for the coordination polymerization is not limited particularly, and for example, a preferred amount thereof is the same as the amount of the catalyst for the anionic polymerization.

Examples of the aluminum compounds to be used as a co-catalyst are organic aluminoxanes, halogenated organoaluminum compounds, organoaluminum compounds, hydrogenated organoaluminum compounds, boron compounds and the like. Examples of the organic aluminoxanes are alkyl aluminoxanes (such as methyl aluminoxane, ethyl aluminoxane, propyl aluminoxane, butyl aluminoxane, isobutyl aluminoxane, octyl aluminoxane, and hexyl aluminoxane). Examples of the halogenated organoaluminum compounds are halogenated alkyl aluminum compounds (such as dimethyl aluminum chloride, diethyl aluminum chloride, methyl aluminum dichloride, and ethyl aluminum dichloride). Examples of the organoaluminum compounds are alkyl aluminum compounds (such as trimethylaluminum, triethylaluminum, triisopropylaluminum, triisobutylaluminum and the like). Examples of the hydrogenated organoaluminum compounds are hydrogenated alkyl aluminum compounds (such as diethylaluminum hydride, diisobutylaluminum hydride and the like). Examples of the boron compounds are compounds having anion species such as tetraphenylborate, tetrakis(pentafluorophenyl)borate, and (3,5-bistrifluoromethylphenyl)borate. These co-catalysts can also be used alone or can be used in combination of two or more thereof.

In the coordination polymerization, the solvents and the polar compounds used in the anionic polymerization can be used similarly. Termination of the polymerization reaction and separation of the branched conjugated diene copolymer can also be carried out in the same manner as in the anionic polymerization. In addition, the reaction time and the reaction temperature are the same as those explained in the anionic polymerization.

(Resin components)

Terpene resins such as a polyterpene resin, a terpene phenol resin and a terpene styrene resin are used suitably as a resin component to be used in this embodiment, and a terpene phenol resin and a terpene styrene resin are preferred more.

(Terpene resins)

The terpene resins have a low SP value as compared with other adhesive resins such as an aliphatic petroleum resin, an aromatic petroleum resin, a phenolic resin, a coumarone-indene resin and a rosin resin, and since the value is close to that of NR (SP value: 8.1), compatibility thereof with the rubber component according to this embodiment is good. It is noted that the SP value of the terpene resin is preferably not more than 8.6, more preferably not more than 8.5 for the reason that water repellency of the rubber composition can be enhanced more. In addition, the SP value of the terpene resin is preferably not less than 7.5 from the viewpoint of compatibility with the rubber component.

The polyterpene resin is a resin prepared using at least one selected from terpene compounds as a starting material. The terpene compound is α-pinene, β-pinene, 3-carene (δ-3-carene), dipentene, limonene, myrcene, alloocimene, ocimene, α-phellandrene, α-terpinene, γ-terpinene, terpinolene, 1,8-cineol, 1,4-cineol, α-terpineol, β-terpineol, or γ-terpineol. Among these, from a point that grip performance and durability can be improved in good balance, α-pinene, β-pinene, 3-carene (δ-3-carene), dipentene and limonene are preferred, and α-pinene and limonene are preferred. Here, limonene may be any of d-limonene, l-limonene and dl-limonene. These terpene compounds may be used

alone, or may be used in combination of two or more thereof.

The terpene phenol resin is a resin prepared using the above-mentioned terpene compound and phenolic compound as a starting material. The terpene styrene resin is a resin prepared using the above-mentioned terpene compound and styrene as a starting material. It is noted that the polyterpene resin and the terpene styrene resin may be those subjected to hydrogenation treatment (hydrogenated polyterpene resin, hydrogenated terpene styrene resin)

The hydrogenation treatment of the terpene resin can be performed by a known method, and also a commercially available hydrogenated resin may be used. A hydrogenation ratio of a double bond is preferably not less than 5%, more preferably not less than 7%, further preferably not less than 10%, particularly preferably not less than 15% from the viewpoint of grip performance. On the other hand, the hydrogenation ratio of a double bond is preferably not more than 80%, more preferably not more than 60%, further preferably not more than 40%, particularly preferably not more than 30%. It is noted that the hydrogenation ratio is a value calculated by the following equation from each integrated value of peaks derived from a double bond by means of 1H-NMR (proton NMR). Herein, the hydrogenation ratio means a hydrogenation ratio of a double bond.

$$\text{(Hydrogenation ratio (\%))} = \{(A-B)/A\} \times 100$$

A: Integrated value of a peak of a double bond before hydrogenation
B: Integrated value of a peak of a double bond after hydrogenation

A softening point of the terpene resin is preferably 0°C or higher from the viewpoint of grip performance. On the other hand, a softening point of the terpene resin is preferably 170°C or lower, more preferably 160°C or lower, more preferably 145°C or lower, further preferably 130°C or lower. In the present disclosure, the softening point of the resin is one specified in JIS K6220-1: 2001 and is a temperature at the time when the ball has dropped in the measurement with the ring and ball softening point measuring device.

A glass transition temperature (Tg) of the terpene resin is preferably -35°C or higher, more preferably -30°C or higher from the viewpoint of compatibility with the rubber component. On the other hand, the Tg of the terpene resin is preferably 110°C or lower, more preferably 100°C or lower from the viewpoint of compatibility with the rubber component.

A content of the terpene resin is preferably not less than 1 part by mass, more preferably not less than 5 parts by mass, further preferably not less than 8 parts by mass for the reason that an effect of the present invention can be obtained satisfactorily. On the other hand, the content of the terpene resin is preferably not more than 20 parts by mass, more preferably not more than 15 parts by mass from the viewpoint of making it possible to properly secure a hardness, mold processability and viscosity of the rubber composition.

Among the terpene resins exemplified above, any one of them may be used alone, or two or more kinds thereof may be used in combination. Commercially available terpene resins may be used as the terpene resins used in this embodiment. Examples of such commercially available terpene resins include those manufactured and marketed by Arizona Chemical Company, LLC, Yasuhara Chemical Co., Ltd., etc.

(Resins other than terpene resins)

In the rubber composition according to this embodiment, one or more of adhesive resins other than the terpene resins can be used together as resin components. Petroleum resins and the like which are used commonly in a rubber composition for a tire can be used as the adhesive resin other than terpene resins, and examples thereof include aliphatic petroleum resins, aromatic petroleum resins, phenolic resins, coumarone-indene resins, rosin resins, styrene resins, acrylic resins, cyclopentadiene resins and the like. Among these, for the reason that grip performance is good, it is preferable to use phenolic resins, coumarone-indene resins, terpene resins, styrene resins, acrylic resins and cyclopentadiene resins. Further, for the reason that an SP value is low and compatibility with NR is good, cyclopentadiene resins are more preferable.

Examples of cyclopentadiene resins include dicyclopentadiene resins (DCPD resins), cyclopentadiene resins, methylcyclopentadiene resins, and these cyclopentadiene resins subjected to hydrogenation (hydrogenated cyclopentadiene resins). Among these, hydrogenated DCPD resins are preferred. Hydrogenation treatment of cyclopentadiene resins can be performed by a known method.

Examples of the phenolic resin include Koreshin (manufactured by BASF), TACKIROL (manufactured by Taoka Chemical Co., Ltd.) and the like. Examples of the coumarone-indene resin include Esukuron (manufactured by Nippon Steel & Sumikin Chemical Co., Ltd.), Neo polymer (manufactured by JXTG Nippon Oil & Energy Corporation) and the like. Examples of the styrene resin include Sylvatraxx 4401 (manufactured by Arizona Chemical Company, LLC), and the like. Examples of the cyclopentadiene resins include Oppera (available from Exxon Mobil Corporation) and the like.

These adhesive resins may be used alone, or may be used in combination of two or more thereof.

When the rubber composition comprises an adhesive resins other than terpene resins, the content thereof is preferably not less than 1 part by mass, more preferably not less than 3 parts by mass, further preferably not less than 5 parts by mass based on 100 parts by mass of the rubber component for the reason that an effect of the present invention can be obtained satisfactorily. On the other hand, the content is preferably not more than 20 parts by mass, more preferably not more than 15 parts by mass from the viewpoint of making it possible to properly secure a hardness, mold processability and viscosity of the rubber composition.

(Other components)

The rubber composition of this embodiment can comprise compounding agents other than the above-mentioned components, and can comprise, for example, a process oil, a liquid polymer, a reinforcing filler, zinc oxide, stearic acid, antioxidants, a processing aid, wax, a vulcanizing agent, a vulcanization accelerator and the like.

A process oil and a liquid polymer are not limited particularly, and the rubber composition can comprise a process oil and a liquid polymer which are used for rubber products such as tires. When the rubber composition comprises at least one of a process oil and a liquid polymer, the content thereof is preferably not less than 9 parts by mass, more preferably not less than 10 parts by mass based on 100 parts by mass of the rubber component for the reason that since compounding of a process oil and a liquid polymer leads to a low viscosity of the rubber composition, thereby easily generating excessive adhesion and exhibiting an effect of the present invention more. On the other hand, the content is preferably not more than 100 parts by mass, more preferably not more than 90 parts by mass from the viewpoint of exhibiting both of good abrasion resistance and grip performance.

A total content of a process oil and a liquid polymer is preferably not less than 20 parts by mass, more preferably not less than 22 parts by mass for the reason that since compounding of a process oil and a liquid polymer leads to a low viscosity of the rubber composition, thereby easily generating excessive adhesion and exhibiting an effect of the present invention more. On the other hand, the total content is preferably not more than 100 parts by mass, more preferably not more than 90 parts by mass

A reinforcing filler is not limited particularly, and examples thereof include a white filler, carbon black and the like.

Examples of a white filler include silica, aluminum hydroxide, alumina (aluminum oxide), calcium carbonate, talc, hard clay and the like, and these white fillers can be used alone or can be used in combination of two or more thereof. It is preferable to compound at least one of silica and aluminum hydroxide for the reason that abrasion resistance, durability, wet grip performance and fuel efficiency are good.

Silica is not limited particularly, and there are, for example, silica prepared by a dry method (anhydrous silica), silica prepared by a wet method (hydrous silica), calcium silicate, aluminum silicate and the like, and hydrous silica is preferred for the reason that many silanol groups are contained.

A BET specific surface area of silica is preferably 70 to 300 $m^2/g$, more preferably 80 to 280 $m^2/g$, further preferably 90 to 250 $m^2/g$ from the viewpoint of abrasion resistance, wet grip performance and processability. Herein, the $N_2SA$ of silica is a value measured by the BET method in accordance with ASTM D3037-81.

When the rubber composition comprises a silica, the content thereof is preferably not less than 40 parts by mass, more preferably not less than 50 parts by mass based on 100 parts by mass of the rubber component from the viewpoint of wet grip performance. On the other hand, the content of the silica is preferably not more than 150 parts by mass, more preferably not more than 140 parts by mass for inhibiting shrinkage resulting from cooling after vulcanization and securing a breaking stress (TB).

It is preferable that the silica is used in combination with a silane coupling agent. Any silane coupling agent which has been used in combination with silica in the rubber industry can be used as the silane coupling agent, and examples thereof include sulfide silane coupling agents such as bis(3-triethoxysilylpropyl)disulfide and bis(3-triethoxysilylpropyl)tetrasulfide; mercapto silane coupling agents (mercapto group-containing silane coupling agents) such as 3-mercaptopropyltrimethoxysilane, and NXT-Z100, NXT-Z45 and NXT manufactured by Momentive Performance Materials; vinyl silane coupling agents such as vinyltriethoxysilane; amino silane coupling agents such as 3-aminopropyltriethoxysilane; glycidoxy silane coupling agents such as $\gamma$-glycidoxypropyltriethoxysilane; nitro silane coupling agents such as 3-nitropropyltrimethoxysilane; and chloro silane coupling agents such as 3-chloropropyltrimethoxysilane. These silane coupling agents may be used alone or may be used in combination with two or more thereof.

When the rubber composition comprises a silane coupling agent, the content thereof is preferably not less than 4.0 parts by mass, more preferably not less than 6.0 parts by mass based on 100 parts by mass of the silica from a point that an effect of sufficiently improving dispersibility of the filler and an effect of decreasing a viscosity can be obtained. On the other hand, the content of the silane coupling agent is preferably not more than 12 parts by mass, more preferably not more than 10 parts by mass from a point that a sufficient coupling effect and a silica dispersion effect can be obtained and lowering of reinforcing property is prevented.

The BET specific surface area of aluminum hydroxide is preferably 5 $m^2/g$ or more, preferably 10 $m^2/g$ or more,

more preferably 12 $m^2/g$ or more, from the viewpoint of wet grip performance. On the other hand, the BET specific surface area of aluminum hydroxide is preferably 50 $m^2/g$ or less, more preferably 45 $m^2/g$ or less, further preferably 40 $m^2/g$ or less, from the viewpoint of abrasion resistance. It should be noted that the BET specific surface area of aluminum hydroxide as used herein is a value determined by measurement using the BET method in accordance with ASTM D3037-81.

The average particle size (D50) of aluminum hydroxide is preferably 0.1 μm or more, more preferably 0.2 μm or more, further preferably 0.3 μm or more, from the viewpoint of dispersibility of aluminum hydroxide, prevention of re-agglomeration and abrasion resistance. On the other hand, the average particle size (D50) of aluminum hydroxide is preferably 3.0 μm or less, more preferably 2.0 pm, from the viewpoint of abrasion resistance. The average particle size (D50) as used herein refers to a particle size at a cumulative mass percentage of 50% in a particle-size distribution curve determined by a particle diameter distribution measurement apparatus.

When the rubber composition comprises an aluminum hydroxide, the content thereof is preferably not less than 1 part by mass, more preferably not less than 2 parts by mass, further preferably not less than 5 parts by mass based on 100 parts by mass of the rubber component from the viewpoint of grip performance. On the other hand, the content of aluminum hydroxide is not more than preferably 50 parts by mass, more preferably not more than 45 parts by mass, further more preferably not more than 40 parts by mass from the viewpoint of abrasion resistance.

Carbon black commonly used for rubber can be used appropriately. Examples of carbon black include furnace black, acetylene black, thermal black, channel black, graphite, and the like, and specifically N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991 and the like can be used suitably. Besides those mentioned above, carbon black synthesized by Sumitomo Rubber Industries, Ltd. can also be used suitably. These carbon blacks may be used alone or may be used in combination of two or more thereof.

A BET specific surface area of carbon black is preferably 70 $m^2/g$ or more, more preferably 90 $m^2/g$ or more from a viewpoint of a reinforcing property and abrasion resistance. Further, the BET specific surface area of carbon black is preferably 300 $m^2/g$ or less, more preferably 250 $m^2/g$ or less from a viewpoint of dispersibility and heat generation. Herein, the BET specific surface area of carbon black is a value measured according to JIS K 6217-2 "Carbon black for rubber industry - Fundamental characteristics - Part 2: Determination of specific surface area - Nitrogen adsorption methods - Single-point procedures".

When the rubber composition comprises a carbon black, the content thereof is preferably not less than 1 part by mass, more preferably not less than 3 parts by mass, further preferably not less than 5 parts by mass based on 100 parts by mass of the rubber component from the viewpoint of reinforcing property. On the other hand, the content of carbon black is preferably not more than 100 parts by mass, more preferably not more than 50 parts by mass, further preferably not more than 30 parts by mass from the viewpoint of processability and heat generation.

A content of the whole reinforcing fillers is preferably not less than 50 parts by mass, more preferably not less than 70 parts by mass, further preferably not less than 90 parts by mass based on 100 parts by mass of the rubber component from the viewpoint of wet grip performance. On the other hand, the content is preferably not more than 150 parts by mass, more preferably not more than 140 parts by mass, further preferably not more than 130 parts by mass from the viewpoint of dispersibility of silica and processability.

When the rubber composition comprises a zinc oxide, the content thereof is preferably not less than 0.5 part by mass, more preferably not less than 1 part by mass based on 100 parts by mass of the rubber component from the viewpoint of a vulcanization rate. On the other hand, the content is preferably not more than 10 parts by mass, more preferably not more than 5 parts by mass from the viewpoint of abrasion resistance.

When the rubber composition comprises a stearic acid, the content thereof is preferably not less than 0.2 part by mass, more preferably not less than 1 part by mass based on 100 parts by mass of the rubber component from the viewpoint of a vulcanization rate. On the other hand, the content is preferably not more than 10 parts by mass, more preferably not more than 5 parts by mass from the viewpoint of processability.

The antioxidant is not limited particularly as long as it is generally used for a rubber composition as a heat resistant antioxidant, a weather resistant antioxidant and the like. Examples thereof include amine antioxidants such as naphthylamine antioxidants (for example, phenyl-α-naphthylamine), diphenylamine antioxidants (for example, octylated diphenylamine, 4,4'-bis(α,α'-dimethylbenzyl)diphenylamine and the like), and p-phenylenediamine antioxidants (for example, N-isopropyl-N'-phenyl-p-phenylenediamine, N-(1,3-dimethylbutyl)-N'-phenyl-p-phenylenediamine, N,N'-di-2-naphthyl-p-phenylenediamine and the like): quinoline antioxidants such as a polymer of 2,2,4-trimethyl-1,2-dihydroquinoline and the like; phenol antioxidants such as monophenol antioxidants (for example, 2,6-di-t-butyl-4-methylphenol, styrenated phenol and the like), bis, tris, polyphenol antioxidants (for example, tetrakis-[methylene-3-(3',5'-di-t-butyl-4'-hydroxyphenyl)propionate]met han) and the like. Among these, amine antioxidants are preferable since these are good in ozone resistance and p-phenylenediamine antioxidants are particularly preferable.

When the rubber composition comprises an antioxidant, the content thereof is preferably not less than 0.5 part

by mass, more preferably not less than 1.0 part by mass based on 100 parts by mass of the rubber component from the viewpoint of ozone resistance and crack resistance. On the other hand, the content of an antioxidant is preferably not more than 10 parts by mass, more preferably not more than 5 parts by mass from the viewpoint of the prevention of discoloration.

Examples of the processing aid include fatty acid metal salts such as zinc stearate and the like. Specifically there are, for example, fatty acid soap processing aids such as Struktol WB16 and EF44 available from Schill & Seilacher Struktol GmbH. A compounding amount of the processing aid is preferably not less than 0.1 part by mass based on 100 parts by mass of a total amount of rubber components, and is preferably not more than 5 parts by mass, particularly preferably not more than 3 parts by mass.

When the rubber composition comprises a wax, the content thereof is preferably not less than 0.5 part by mass, more preferably not less than 1 part by mass based on 100 parts by mass of the rubber component from the viewpoint of weather resistance of the rubber. On the other hand, the content of wax is preferably not more than 10 parts by mass, more preferably not more than 5 parts by mass from the viewpoint of whitening of a tire due to blooming.

Examples of the vulcanizing agent include sulfur such as powder sulfur, precipitated sulfur, colloidal sulfur, surface-treated sulfur and insoluble sulfur. A content of the vulcanizing agent is not limited particularly as long as an effect of the present invention is not impaired, and is a content usually used in a rubber composition.

Examples of vulcanizing agents other than sulfur include a vulcanizing agent containing a sulfur atom such as TACKIROL V200 manufactured by Taoka Chemical Co., Ltd., Duralink HTS (1,6-hexamethylene-sodium dithiosulfate dehydrate) manufactured by Flexsys, KA9188 (1,6-bis(N,N'-dibenzylthiocarbamoyldithio)hexane) manufactured by LANXESS and the like, an organic peroxide such as a dicumyl peroxide and the like.

Examples of the vulcanization accelerator include sulfenamide-, thiazole-, thiuram-, thiourea-, guanidine-, dithiocarbamate-, aldehyde amine- or aldehyde ammonia-, imidazoline- and xanthate-based vulcanization accelerators. These vulcanization accelerators may be used alone or may be used in combination of two or more thereof. Among these, sulfenamide-, thiazole- and guanidine-based vulcanization accelerators are preferred, and combination use thereof is more preferred.

Examples of the sulfenamide-based vulcanization accelerators include N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS) and the like. Among these, N-cyclohexyl-2-benzothiazolylsulfenamide is preferred.

Examples of the thiazole-based vulcanization accelerators include 2-mercaptobenzothiazole, cyclohexylamine salt of 2-mercaptobenzothiazole, di-2-benzothiazolyldisulfide and the like. Among these, 2-mercaptobenzothiazole is preferred.

Examples of the guanidine-based vulcanization accelerators include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine and the like. Among these, 1,3-diphenylguanidine is preferable.

When the rubber composition comprises a vulcanization accelerator, the content thereof is preferably 0.5 part by mass or more, more preferably 1.5 parts by mass or more based on 100 parts by mass of the rubber component from a point that vulcanization rate is appropriate and vulcanization can be done sufficiently. On the other hand, the content of the vulcanization accelerator is preferably 4.0 parts by mass or less, more preferably 3.0 parts by mass or less based on 100 parts by mass of the rubber component since a vulcanization rate is sufficient and scorching is hardly generated.

(Preparation of rubber composition and production of tire)

The rubber composition for a tread of the present disclosure can be prepared by known methods, for example, by kneading the above-mentioned components with a rubber kneader such as an open roll, a Banbury mixer, a closed kneader or the like and then vulcanizing a resultant kneaded product.

The kneading step for kneading each component may be a kneading step comprising a base kneading step for kneading compounding agents and additives other than the vulcanizing agent and vulcanization accelerators with a kneading apparatus such as a Banbury mixer, a kneader or an open roll and a final kneading step (F-kneading) for adding the vulcanizing agent and vulcanization accelerators to a kneaded product obtained in the base kneading step. Further, from the viewpoint of dispersing the silica efficiently, the base kneading step can be divided into an X-kneading step for preparing a masterbatch comprising a butadiene rubber, silica and an isoprene rubber which is a minimum requirement for securing processability and a Y-kneading step for adding remaining compounding agents and additives other than the vulcanizing agent and vulcanization accelerators to the masterbatch and then vulcanizing a resultant kneaded product.

The studless tire of the present disclosure can be produced by a usual method using the above-mentioned rubber composition for a tread. Namely, the unvulcanized rubber composition is extrusion-processed into a shape of a tread of a tire, and the obtained extruded product is laminated with other tire members to form an unvulcanized tire on

a tire molding machine. The tire of the present invention can be produced by heating and pressurizing this unvulcanized tire in a vulcanizer.

EXAMPLE

The present invention is explained by means of Examples, but is not limited to the Examples.

Various chemicals used in Examples and Comparative Examples are collectively shown below.

NR: TSR 20

Un-modified BR: BR730 manufactured by JSR Corporation (un-modified BR, cis content: 95%, $ML_{1+4}$(100°C): 55)

Modified BR: N103 manufactured by Asahi Kasei Chemicals Corporation (terminal-modified BR obtained by polymerization using a lithium initiator and modifying a terminal of a polymerized BR with a mixture of tetraglycidyl-1,3-bisaminomethylcyclohexane and an oligomer thereof, Mw: 550,000, Mw/Mn: 1.19, vinyl content: 12% by mass, cis content: 38% by mass, trans content: 50% by mass)

Carbon black: DIABLACK I (ASTM No. N220, $N_2SA$: 114 $m^2/g$, DBP: 114 ml/ 100 g) manufactured by Mitsubishi Chemical Corporation Silica: Ultra Jill VN3 ($N_2SA$: 175 $m^2/g$, average primary particle size: 15 nm) available from Evonik Degussa GmbH

Silane coupling agent: Si266 (bis(3-triethoxysilylpropyl)disulfide) available from Evonik Degussa GmbH

Copolymer 1: Farnesene-butadiene copolymer prepared by synthesis of a branched conjugated diene copolymer explained infra

Terpene resin 1: SYLVATRAXX 4202 (terpene-phenol resin not hydrogenated, softening point: 115°C, SP value: 8.75) manufactured by Arizona Chemical Company, LLC

Terpene resin 2: YS Resin TO125 (terpene-styrene resin not hydrogenated, softening point: 125°C, Tg: 64°C, SP value: 8.73) manufactured by Yasuhara Chemical Co., Ltd.

Terpene resin 3: YS POLYSTER M125 (hydrogenated terpene-styrene resin (hydrogenation ratio: 11%), softening point: 123°C, Tg: 69°C, SP value: 8.52) manufactured by Yasuhara Chemical Co., Ltd.

Styrene resin: SYLVATRAXX 4401 (α-Methyl styrene resin, softening point: 85°C, Tg: 34°C, SP value: 9.1) manufactured by Arizona Chemical Company, LLC

Oil: Diana Process oil NH-70S available from Idemitsu Kosan Co., Ltd. Wax: Ozoace 0355 available from NIPPON SEIRO CO., LTD.

Antioxidant 1: NOCRAC 6C (N-(1,3-dimethylbutyl)-N-phenyl-p-phenylenediamine) available from Ouchi Shinko Chemical Industrial Co., Ltd.

Antioxidant 2: NOCRAC RD (ply(2,2,4-trimethyl-1,2-dihydroquinoline) available from Ouchi Shinko Chemical Industrial Co., Ltd.

Processing aid: Struktol WB16 (a mixture of fatty acid ester and fatty acid metal salt) available from Schill & Seilacher

Stearic acid: Stearic acid "Tsubaki" available from NOF CORPORATION Zinc oxide: Zinc White Grade 1 available from Mitsui Mining & Smelting Co., Ltd.

Sulfur: 5% oil-treated powdered sulfur (soluble sulfur having an oil content of 5% by mass) available from Tsurumi Chemical Industry Co., Ltd.

Vulcanization accelerator 1: NOCCELER CZ (CBS, N-cyclohexyl-2-benzothiazolylsulfenamide) available from Ouchi Shinko Chemical Industrial Co., Ltd.

Vulcanization accelerator 2: NOCCELER M-P (MBT, 2-mercaptobenzothiazole) available from Ouchi Shinko Chemical Industrial Co., Ltd.

Vulcanization accelerator 3: NOCCELER D (DPG, 1,3-diphenylguanidine) available from Ouchi Shinko Chemical Industrial Co., Ltd.

Cyclohexane: Cyclohexane (special grade) available from Kanto Chemical Industry Co., Ltd.

Isopropanol: Isopropanol (special grade) available from Kanto Chemical Industry Co., Ltd.

Butadiene: 1,3-Butadiene available from TAKACHIHO CHEMICAL INDUSTRIAL CO., LTD.

Farnesene: (E)-β-farnesene (reagent) available from Nippon Terpene Chemicals, Inc.

<Preparation of catalyst solution>

(1) After replacing inside of a 50 ml glass container with nitrogen gas, 8 ml of cyclohexane solution of butadiene (2.0 mol/liter), 1 ml of neodymium(III) 2-ethylhexanoate/cyclohexane solution (0.2 mol/liter) and 8 ml of PMAO (Al: 6.8% by mass) were poured into the container, followed by stirring of a mixture. Five minutes after, 5 ml of 1M hydrogenated diisobutyl aluminum/hexane solution was added to the mixture, and further five minutes after, 2 ml of 1M diethyl aluminum chloride/hexane solution was added to the mixture, followed by stirring to obtain a catalyst

solution (1).

(2) A catalyst solution (2) was obtained in the same manner as in (1) above except that butadiene was replaced with isoprene.

<Synthesis of branched conjugated diene copolymer>

After replacing inside of a 3-liter pressure-resistant stainless steel container with nitrogen gas, 1800 ml of cyclohexane, 60 g of farnesene and 40 g of butadiene were poured into the container, followed by 10-minute stirring. Thereafter, 2 ml of the catalyst solution (1) was added to a mixture, followed by stirring while keeping a temperature at 30°C. Three hours after, 10 ml of 0.01 M BHT (butylated hydroxytoluene)/isopropanol solution was added dropwise to terminate a reaction. After having been cooled, a reaction liquid was added to 3-liter methanol prepared separately and a thus-obtained precipitate was air-dried overnight and further was subjected to 2-day drying under reduced pressure to obtain 100 g of Copolymer 1 (farnesene/butadiene copolymer). A degree of polymerization (percentage of "dry weight/charged amount") was substantially 100%.

(Copolymerization ratio of branched conjugated diene)

A copolymerization ratio (weight %) of branched conjugated diene was measured by a usual method with pyrolysis gas chromatography (PGC). Namely, a calibration curve of a refined farnesene was made, and a weight % of farnesene in the copolymer was calculated from an area ratio of a pyrolysis product derived from farnesene, in which the area ratio was obtained by PGC. A system comprising a gas chromatograph-gas spectrometer GCMS-QP5050A manufactured by Shimadzu Corporation and a pyrolyzer JHP-330 manufactured by Japan Analytical Industry Co., Ltd. was used for the pyrolysis chromatography. A copolymerization ratio of farnesene in Copolymer 1 was 60% by weight.

Examples and Comparative Examples

Chemicals other than sulfur and vulcanization accelerators were subjected to kneading in accordance with compounding formulations shown in Table 1 at a discharge temperature of 150°C for five minutes using a 1.7 liter closed Banbury mixer to obtain a kneaded product. Subsequently sulfur and vulcanization accelerators were added to the obtained kneaded product, followed by 4-minute kneading with a biaxial open roll until the temperature became 105°C, to obtain an unvulcanized rubber composition. The obtained unvulcanized rubber composition was subjected to vulcanization and molding at 170°C for 12 minutes at a pressure of 25 kgf/$cm^2$ to produce test rubber compositions.

The unvulcanized rubber composition was extruded and molded into a shape of a tire tread by an extruder equipped with a base having a predetermined shape, and then laminated with other tire members to form an unvulcanized tire, which was then press-vulcanized at 170°C for 12 minutes to manufacture a tire for test (size: 195/65R15, studless tire).

The obtained unvulcanized rubber compositions, vulcanized rubber compositions and test tires were subjected to the following evaluations. The results are shown in Table 1.

<Complex elastic modulus (E*) and loss tangent (tanδ)>

A complex elastic modulus (E*) and loss tangent (tanδ) of each vulcanized rubber composition was measured by using a viscoelastic spectrometer VES (manufactured by Iwamoto Seisakusho Co., Ltd.) under the conditions of a temperature of 0°C, an initial strain of 5%, a dynamic strain of 1% and a frequency of 10 Hz. The results are indicated by an index, assuming that a result of Comparative Example 1 is 100.

<On-ice braking performance>

The tires for test were loaded on a 2000 cc FR vehicle domestically produced and were run on ice to evaluate on-ice braking performance. The vehicle was run on ice at a temperature of -10°C and 0°C and during running on ice at a speed of 30 km/h, a lock brake was applied and a stopping distance required for stopping (breaking distance on ice, breaking distance on snow) was measured and was indicated by an index in accordance with the following equation. The larger the index is, the better the on-ice performance (grip performance on ice) is. It can be said that the on-ice performance has been improved when the index is 100 or more.

$$(\text{Index of on-ice braking performance}) = (\text{Stopping distance of Comparative Example 1}) / (\text{Stopping distance of each formulation}) \times 100$$

On-ice test site: Hokkaido Nayoro test course, temperature: -1 to -6°C

<Wet grip performance>

The tires for test were loaded on the whole wheels of a vehicle (2000 cc FR vehicle domestically produced), and on the wet asphalt road surface, a braking distance from an initial speed of 100 km/h was measured. The results are shown by an index. The larger the index is, the better the wet grip performance is. The index was obtained by the following equation.

$$(\text{Index of wet grip performance}) = (\text{Braking distance of Comparative Example 1}) / (\text{Braking distance of each formulation}) \times 100$$

Table 1

| | Example | | | Comparative Example | | | |
|---|---|---|---|---|---|---|---|
| | 1 | 2 | 3 | 1 | 2 | 3 | 4 |
| Compounding amount (part by mass) | | | | | | | |
| NR | 40 | 40 | 40 | 40 | 40 | 40 | 40 |
| Un-modified BR | 25 | 25 | 25 | 25 | 25 | 25 | 25 |
| Modified BR | 35 | 35 | 35 | 35 | 35 | 35 | 35 |
| Carbon black | 5 | 5 | 5 | 5 | 5 | 5 | 5 |
| Silica | 60 | 60 | 60 | 60 | 60 | 70 | 60 |
| Silane coupling agent | 5 | 5 | 5 | 5 | 5 | 5 | 5 |
| Copolymer 1 | 10 | 10 | 10 | - | 10 | - | 10 |
| Terpene resin 1 | 15 | - | - | - | - | 15 | - |
| Terpene resin 2 | - | 15 | - | - | - | - | - |
| Terpene resin 3 | - | - | 15 | - | - | - | - |
| Styrene resin | - | - | - | 15 | 15 | - | 15 |
| Oil | 15 | 15 | 15 | 25 | 15 | 25 | 20 |
| Wax | 1.5 | 1.5 | 1.5 | 1.5 | 1.5 | 1.5 | 1.5 |
| Antioxidant 1 | 2 | 2 | 2 | 2 | 2 | 2 | 2 |
| Antioxidant 2 | 0.5 | 0.5 | 0.5 | 0.5 | 0.5 | 0.5 | 0.5 |
| Processing aid | 4 | 4 | 4 | 4 | 4 | 4 | 4 |
| Stearic acid | 1.5 | 1.5 | 1.5 | 1.5 | 1.5 | 1.5 | 1.5 |
| Zinc oxide | 2 | 2 | 2 | 2 | 2 | 2 | 2 |
| Sulfur | 0.85 | 0.85 | 0.85 | 0.9 | 0.9 | 0.9 | 0.9 |
| Vulcanization accelerator 1 | 2 | 2 | 2 | 2 | 2 | 2 | 2 |
| Vulcanization accelerator 2 | 0.2 | 0.2 | 0.2 | 0.2 | 0.2 | 0.2 | 0.2 |
| Vulcanization accelerator 3 | 1.5 | 1.5 | 1.5 | 1.5 | 1.5 | 1.5 | 1.5 |
| Results of evaluation | | | | | | | |
| E* (0°C) | 102 | 100 | 102 | 100 | 93 | 103 | 90 |
| Tanδ (0°C) | 111 | 113 | 113 | 100 | 96 | 95 | 88 |

(continued)

| | | | | | | | |
|---|---|---|---|---|---|---|---|
| Results of evaluation | | | | | | | |
| On-ice braking performance (-10°C) | 101 | 100 | 101 | 100 | 106 | 101 | 109 |
| On-ice braking performance (0°C) | 109 | 110 | 110 | 100 | 96 | 96 | 88 |
| Wet grip performance | 107 | 109 | 108 | 100 | 98 | 94 | 92 |

From the results shown in Table 1, it is seen that the studless tire of the present invention having a tread composed of the rubber composition for a tread comprising an isoprene rubber, a terpene resin and a branched conjugated diene copolymer has less temperature dependency of on-ice performance and good wet grip performance.

## Claims

1. A rubber composition for a tread comprising a rubber component comprising an isoprene rubber, a terpene resin and a branched conjugated diene copolymer, wherein the branched conjugated diene copolymer is prepared by copolymerizing a branched conjugated diene compound represented by the general formula (1):

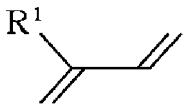
(1)

wherein $R^1$ is an aliphatic hydrocarbon having 6 to 11 carbon atoms and a conjugated diene compound represented by the general formula (2):

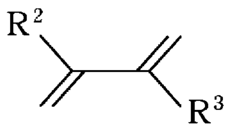
(2)

wherein $R^2$ and $R^3$ are the same or different and each is a hydrogen atom, an aliphatic hydrocarbon group having 1 to 3 carbon atoms or a halogen atom, and
wherein a copolymerization ratio of the branched conjugated diene compound (1) is 1 to 99% by weight and a copolymerization ratio of the conjugated diene compound (2) is 1 to 99% by weight,
wherein the terpene resin is at least one selected from the group consisting of a terpene-phenol resin, which is prepared using a terpene compound and phenolic compound, and a terpene-styrene resin, which is prepared using a terpene compound and styrene, wherein the terpene compound is at least one selected from α-pinene, β-pinene, 3-carene (δ-3-carene), dipentene, limonene, myrcene, alloocimene, ocimene, α-phellandrene, α-terpinene, γ-terpinene, terpinolene, 1,8-cineol, 1,4-cineol, α-terpineol, β-terpineol and γ-terpineol.

2. The rubber composition for a tread of claim 1, comprising 1 to 20 parts by mass of the terpene resin and 1 to 20 parts by mass of the branched conjugated diene copolymer based on 100 parts by mass of the rubber component.

3. The rubber composition for a tread of claim 1 or 2, wherein the branched conjugated diene compound (1) is myrcene and/or farnesene.

4. The rubber composition for a tread of any one of claims 1 to 3, wherein the conjugated diene compound (2) is 1,3-butadiene and/or isoprene.

5. A studless tire having a tread composed of the rubber composition for a tread of any one of claims 1 to 4.

## Patentansprüche

1. Kautschukzusammensetzung für eine Lauffläche, die eine Kautschukkomponente, die einen Isoprenkautschuk umfasst, ein Terpenharz und ein verzweigtes konjugiertes Diencopolymer umfasst, wobei das verzweigte konjugierte Diencopolymer durch Copolymerisation einer verzweigten konjugierten Dienverbindung, dargestellt durch die allgemeine Formel (1):

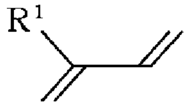

(1)

wobei $R^1$ ein aliphatischer Kohlenwasserstoff mit 6 bis 11 Kohlenstoffatomen ist, und einer konjugierten Dienverbindung, dargestellt durch die allgemeine Formel (2), hergestellt wird:

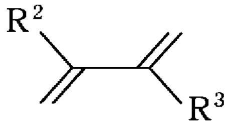

(2)

wobei $R^2$ und $R^3$ gleich oder unterschiedlich sind und jeweils ein Wasserstoffatom, eine aliphatische Kohlenwasserstoffgruppe mit 1 bis 3 Kohlenstoffatomen oder ein Halogenatom sind, und
wobei ein Copolymerisationsverhältnis der verzweigten konjugierten Dienverbindung (1) 1 bis 99 Gew.-% und ein Copolymerisationsverhältnis der konjugierten Dienverbindung (2) 1 bis 99 Gew.-% beträgt,
wobei das Terpenharz zumindest eines ist, ausgewählt aus der Gruppe, bestehend aus einem Terpen-Phenol-Harz, das unter Verwendung einer Terpenverbindung und einer Phenolverbindung hergestellt wird, und einem Terpen-Styrolharz, das unter Verwendung einer Terpenverbindung und Styrol hergestellt wird, wobei die Terpenverbindung zumindest eine ist,
ausgewählt aus α-Pinen, β-Pinen, 3-Caren (δ-3-Caren), Dipenten, Limonen, Myrcen, Alloocimen, Ocimen, α-Phellandren, α-Terpinen, γ-Terpinen, Terpinolen, 1,8-Cineol, 1,4-Cineol, α-Terpineol, β-Terpineol und γ-Terpineol.

2. Kautschukzusammensetzung für eine Lauffläche nach Anspruch 1, die 1 bis 20 Massenteile des Terpenharzes und 1 bis 20 Massenteile des verzweigten konjugierten Diencopolymers, bezogen auf 100 Massenteile der Kautschukkomponente umfasst.

3. Kautschukzusammensetzung für eine Lauffläche nach Anspruch 1 oder 2, wobei die verzweigte konjugierte Dienverbindung (1) Myrcen und/oder Farnesen ist.

4. Kautschukzusammensetzung für eine Lauffläche nach einem der Ansprüche 1 bis 3, wobei die konjugierte Dienmischung (2) 1,3-Butadien und/oder Isopren ist.

5. Spikeloser Reifen mit einer Lauffläche, die aus der Kautschukzusammensetzung für eine Lauffläche nach einem der Ansprüche 1 bis 4 zusammengesetzt ist.

**Revendications**

1. Composition de caoutchouc pour une bande de roulement comprenant un composant caoutchouc comprenant un caoutchouc d'isoprène, une résine de terpène et un copolymère de diène conjugué ramifié, dans laquelle le copolymère de diène conjugué ramifié est préparé par copolymérisation d'un composé diène conjugué ramifié représenté par la formule générale (1) :

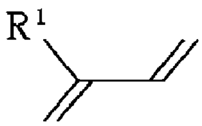

(1)

dans laquelle $R^1$ est un hydrocarbure aliphatique ayant 6 à 11 atomes de carbone, et d'un composé diène conjugué représenté par la formule générale (2) :

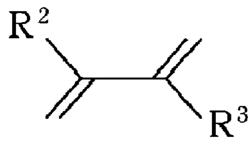

(2)

dans laquelle chacun de $R^2$ et $R^3$, qui sont identiques ou différents, est un atome d'hydrogène, un groupe hydrocarboné aliphatique ayant 1 à 3 atomes de carbone ou un atome d'halogène, et
dans laquelle le taux de copolymérisation du composé diène conjugué ramifié (1) est de 1 à 99 % en poids et le taux de copolymérisation du composé diène conjugué (2) est de 1 à 99 % en poids,
dans laquelle la résine de terpène est au moins l'une choisie dans l'ensemble constitué par une résine de terpène-phénol, qui est préparée par utilisation d'un composé terpène et d'un composé phénolique, et une résine de terpène-styrène, qui est préparée par utilisation d'un composé terpène et de styrène, dans laquelle le composé terpène est au moins l'un choisi parmi l'α-pinène, le β-pinène, le 3-carène (δ-3-carène), le dipentène, le limonène, le myrcène, l'allocimène, l'ocimène, l'α-phéllandrène, l'α-terpinène, le γ-terpinène, le terpinolène, le 1,8-cinéol, le 1,4-cinéol, l'α-terpinéol, le β-terpinéol et le γ-terpinéol.

2. Composition de caoutchouc pour une bande de roulement selon la revendication 1, comprenant 1 à 20 parties en masse de la résine de terpène et 1 à 20 parties en masse du copolymère de diène conjugué ramifié pour 100 parties en masse du composant caoutchouc.

3. Composition de caoutchouc pour une bande de roulement selon la revendication 1 ou 2, dans laquelle le composé diène conjugué ramifié (1) est le myrcène et/ou le farnésène.

4. Composition de caoutchouc pour une bande de roulement selon l'une quelconque des revendications 1 à 3, dans laquelle le composé diène conjugué (2) est le 1,3-butadiène et/ou l'isoprène.

5. Pneu sans crampons ayant une bande de roulement composée de la composition de caoutchouc pour une bande de roulement de l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0551484 A
- JP H0987427 A
- EP 2835386 A1
- EP 2783880 A1
- JP 2010111753 A
- JP 6053768 B
- JP 6057767 B
- JP 2009275178 A